# EUROPEAN PATENT APPLICATION

(11) **EP 0 638 863 A1**
(43) Date of publication of application: **15.02.1995**
(21) Application number: 94112536.1
(22) Date of filing: 10.08.1994
(51) Int. Cl.: G06F 9/46, G06F 13/14

(54) **Distributed data processing system having uniform load distribution**

(30) Priority: 10.08.1993 JP 218172/93
(71) Applicant: NEC CORPORATION, Tokyo (JP)
(72) Inventor: Yokohama, Naohisa, c/o NEC Corporation, Tokyo (JP)
(74) Representative: Betten & Resch

(57) **Abstract**

In a distributed data processing system including a plurality of data processing request units (1-1∼1-3), a plurality of data processing execution units (2-1 ∼2-3), and a network (3) connected therebetween, each of the data processing request units transmits a plurality of load inquiry request signals (S2, S3) to the data processing execution units which in turn generate load response signals (S4, S5) showing wheir load states. Then, the data processing request units selects one of the data processing execution units having a minimum load state and transmit a data processing execution requesting signal to it, so that data processing is executed therein.

## Description

### BACKGROUND OF THE INVENTION

### Field of the Invention

The present invention relates to a distributed data processing system including a plurality of data processing request units, a plurality of data processing execution units, and a network connected therebetween.

### Description of the Related Art

A prior art distributed data processing system includes a plurality of data processing request units, a plurality of data processing execution units, a network connected between the data processing request units and the data processing execution units, and a distribution/supervisory unit for centralized control to disperse the loads of the data processing execution units.

In the above-mentioned prior art distributed data processing system, however, a protocol is required for interaction between the data processing request units and the distribution/supervisory unit, interaction between the distribution/supervisory unit and the data processing execution units, and interaction between the data processing request units and the data processing execution units, and thus, the protocol becomes complex. Also, the centralized control by the distribution/supervisory unit may cause the entire system to malfunction. This will be explained later in detail.

### SUMMARY OF THE INVENTION

It is an object of the present invention to make the loads in data processing execution units in a distributed data processing system uniform without using centralized control.

According to the present invention, in a distributed data processing system including a plurality of data processing request units, a plurality of data processing execution units, and a network connected therebetween, each of the data processing request units transmits a plurality of load inquiry request signals to the data processing execution units which, in turn, generate load response signals showing their load states. Then, the data processing request units select one of the data processing execution units having a minimum load state and transmits a data processing execution requesting signal to it, so that data processing is executed therein. That is, communication between the data processing request units and the data processing execution units is established directly via the network. Thus, a protocol therefor is simplified.

### BRIEF DESCRIPTION OF THE DRAWINGS

The present invention will be more clearly understood from the description as set forth below, in comparison with the prior art, with reference to the accompanying drawings, wherein:
Fig. 1 is a block diagram illustrating a prior art distributed data processing system;
Fig. 2 is a timing diagram showing a protocol of the system of Fig. 1;
Fig. 3 is a block diagram illustrating an embodiment of the distributed data processing system according to the present invention; and
Figs. 4, 5 and 6 are timing diagrams showing protocols of the system of Fig. 3.

### DESCRIPTION OF THE PREFERRED EMBODIMENT

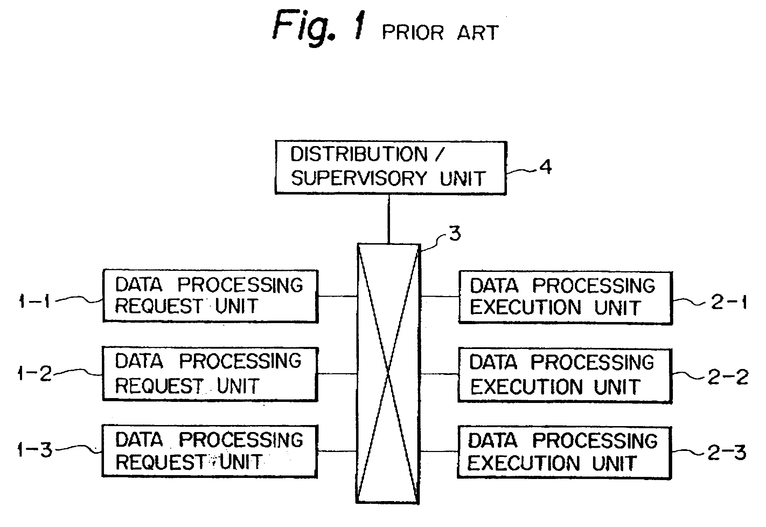

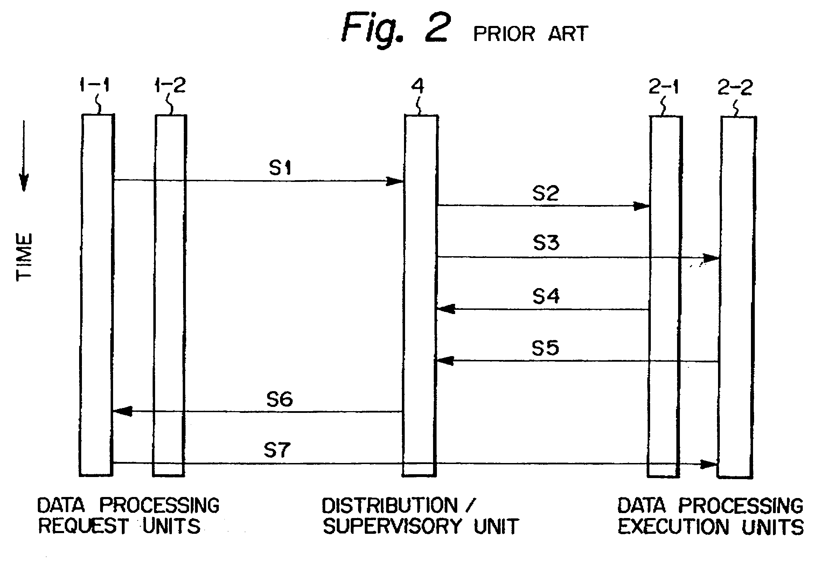

Before the description of the preferred embodiment, a prior art distributed data processing system will be explained with reference to Figs. 1 and 2.

In Fig. 1, which illustrates a prior art distributed data processing system, data processing request units 1-1 to 1-3 and data processing execution units 2-1 to 2-3 are mutually connected by a network 3, and are centrally controlled by a distribution/supervisory unit 4.

For example, assume that a processing request is generated in the data processing request unit 1-1, and the data processing execution unit 2-2 is in a lowest load state. In this case, the data processing request unit 1-1 establishes communication with the distribution/supervisory unit 4 via the network 3 to ask for assignment of data processing. Next, the distribution/supervisory unit 4 establishes communication with the data processing execution units 2-1 to 2-3 via the network 3 to search for the data processing execution unit 2-2 which is in the lowest load state. As a result of this search, the distribution/supervisory unit responds to the data processing request unit 1-1 indicating that the unit 1-1 should request the data processing execution unit 2-2 to process the data. Finally, the data processing request unit 1-1 establishes communication with the data processing execution unit 2-2 via the network 3, and the data processing request unit 1-1 requests the data processing execution 2-2 to execute data processing.

The above-described mutual communication is estalished based upon a protocol as illustrated in Fig. 2. In Fig. 2, only the two data processing request units 1-1 and 1-2 and the two data processing execution units 2-1 and 2-2 are illustrated for simplification of the desription. Also, in Fig. 2, note that the load state of the data processing execution unit 2-1 is high while the load state of the data processing execution unit 2-2 is low. Also, the protocol is represented by horizontal lines, and the time stream is indicated by arrows.

First, upon generation of a request for data processing to be executed, the data processing request unit 1-1 generates a process assignment requesting signal S1 and transmits it to the distribution/supervisory unit 4. As a result, the distribution/supervisory unit 4 generates load inquiry signals S2 and S3 and transmits the load inquiry signals S2 and S3 to both of the data processing execution units 2-1 and 2-2.

Next, each of the data processing execution units 2-1 and 2-2 inform their current load states to the distribution/supervisory unit 4 by generating load response signals S4 and S5.

As a result, the distribution/supervisory unit 4 selects one of the data processing execution units 2-1 and 2-2 which is in the lowest load state. In this case, the distribution/supervisory unit 4 selects the data processing execution unit 2-2, and transmits a processing assignment response signal S6 including address information of the data processing execution unit 2-2 to the data processing request unit 1-1.

Finally, the data processing request unit 1-1 transmits a data processing execution requesting signal S7 directly to the data processing execution unit 2-2 by using the address information transmitted from the distribution/supervisory unit 4. Thus, the data processing execution unit 2-2 executes data processing for the data processing request unit 1-1.

Similarly, if a data processing request occurs in the data processing request unit 1-2 after generation of a data processing request in the data processing request unit 1-1, the protocol described in Fig. 2 is applied to the data processing request unit 1-2.

In the distributed data processing system of Fig. 1 using the protocol of Fig. 2, however, the protocol is required for interaction between the data processing reqnesting units 1-1 to 1-3 and the distribution/supervisory unit 4, interaction between the distribution/supervisory unit 4 and the data processing execution units 2-1 to 2-3, and interaction between the data processing request units 1-1 to 1-3 and the data processing execution units 2-1 to 2-3, and thus, the protocol become complex. Also, the centralized control by the distribution/supervisory unit may cause the entire system to malfunction, since the distribution/supervisory unit 4 may be overloaded, and also the distribution/supervisory unit 4 may experience problems thus stopping the function thereof.

In order to prevent overloading of the distribution/supervisory unit 4 and also to avoid problems with the distribution/supervisory unit 4, two or more distribution/supervisory units may be provided; however, in this case, the protocol therefor becomes more complex, thus further complicating the system.

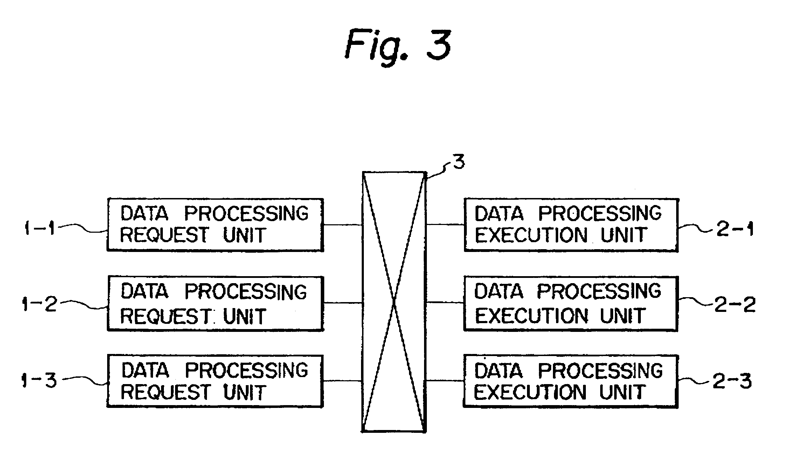

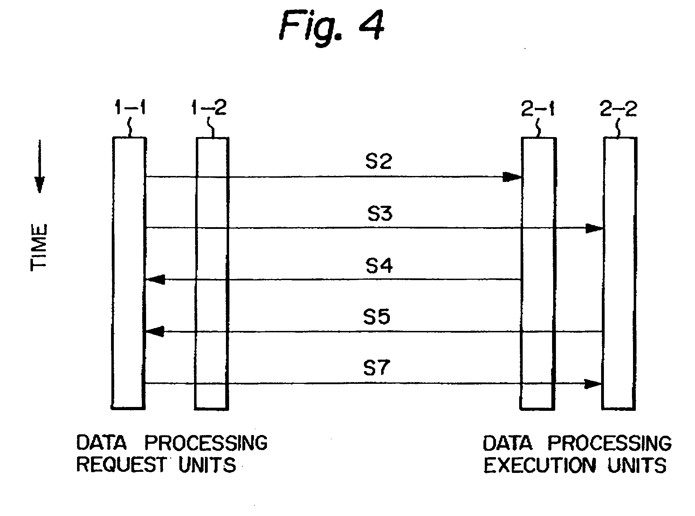

In Fig. 3, which illustrates an embodiment of the present invention, the distribution/supervisory unit 4 of Fig. 1 is not provided, and accordingly, the data processing request units 1-1 to 1-3 establish direct communication with the data processing execution units 2-1 to 2-3, so as to receive assignment of the data processing execution units 2-1 to 2-3 for execution of data processing. Mutual communication in Fig. 3 is established based upon a protocol as illustrated in Fig. 4. Also, in Fig. 4, only the two data processing request units 1-1 and 1-2 and the two data processing execution units 2-1 and 2-2 are illustrated for simplification of the desription. Also, in Fig. 4, note that the load state of the data processing execution unit 2-1 is high while the load state of the data processing execution unit 2-2 is low. Also, the protocol is represented by horizontal lines, and the time stream is indicated by arrows.

First, upon generation of a data request for processing to be executed, the data processing request unit 1-1 generates load inquiry signals S2 and S3 and transmits the load inquiry signals S2 and S3 to both of the data processing execution units 2-1 and 2-2.

Next, each of the data processing execution units 2-1 and 2-2 inform their current load states to the data processing request unit 1-1 by generating load response signals S4 and S5.

Finally, the data processing request unit 1-1 selects one of the data processing execution units 2-1 and 2-2 which is in the lowest load state. In this case, the data processing request unit 1-1 selects the data processing execution unit 2-2. Then, the data processing request unit 1-1 transmits a data processing execution requesting signal S7 directly to the data processing execution unit 2-2. Thus, the data processing execution unit 2-2 executes data processing for the data processing request unit 1-1.

Similarly, if a data processing request occurs in the data processing request unit 1-2 after generation of a data processing request in the data processing request unit 1-1, the protocol described in Fig. 4 is applied to the data processing request unit 1-2.

In Fig. 4, the process assignment requesting signal S1 and the process assignment response signal S7 of Fig. 2 are absent, thus simplifying the protocol of Fig. 4.

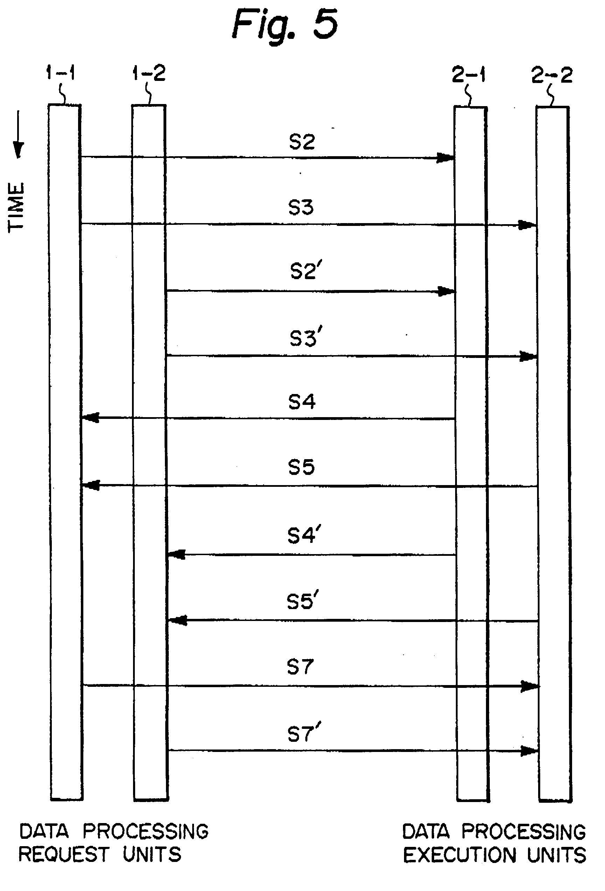

In the protocol of Fig. 4, however, when the data processing request units 1-1 and 1-2 generate load inquiry request signals almost simultaneously, unbalanced assignment of data processinging execution may occur so that the load states of the data processing execution units 2-1 and 2-2 are unbalanced. For example, as shown in Fig. 5, immediately after the data processing request unit 1-1 transmits load inquiry request signals S2 and S3 to the data processing execution units 2-1 and 2-2, respectively, the data processing request unit 1-2 transmits load inquiry request signals S2' and S3' to the data processing execution units 2-1 and 2-2, respectively. Then, the data processing execution units 2-1 and 2-2 transmit load response signals S4 and S5, respectively, to the data processing request unit 1-1 and immediately thereafter, the data processing execution units 2-1 and 2-2 transmit load response signals S4' and S5', respectively to the data processing request unit 1-2. In this case, the load response signals S4' and S5' are the same as the response signals S4 and S5, respectively. Therefore, both of the data processing request units 1-1 and 1-2 select the data processing execution unit 2-2, and as a result, the load of the data processing execution unit 2-2 is increased, thus creating an unbalanced load distribution between the data processing execution units 2-1 and 2-2.

In order to avoid the above-described unbalanced load distribution between the data processing execution units 2-1 and 2-2, a reception prohibiting time period T1 is introduced. That is, when one of the data processing execution units, such as 2-2, receives one load inquiry request signal, the data processing execution unit 2-2 thereafter rejects other load inquiry request signals for the reception prohibiting time period T1. In this case, the reception prohibiting time period T1 is larger than a time period defined as a time from when one load inquiry request signal is received by one data processing execution unit to a time when a data processing execution requesting signal for the received load inquiry request signal is received by the same data processing execution unit. Also, a retransmission time period T2 is introduced. That is, even after the retransmission time period T2 has passed after transmission of a load inquiry request signal from one data processing request unit to one data processing execution unit, if the data processing request unit does not receive a load response signal from the data processing execution unit for the time period T2, the data processing request unit retransmits the load inquiry request signal to the same data processing execution unit. In this case, the time period T2 is larger than the time period T1.

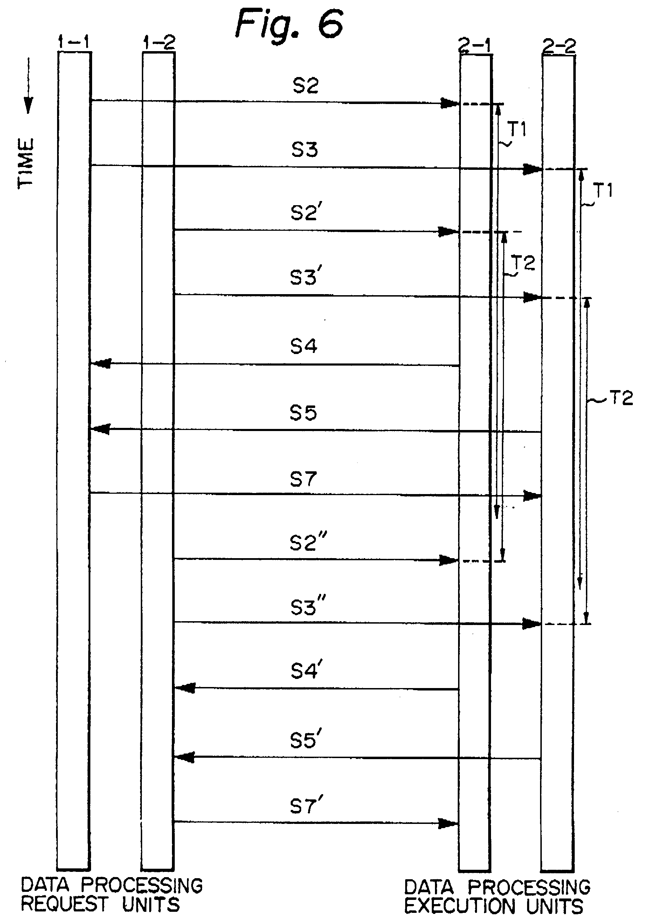

In Fig. 6, which introduces the reception prohibiting time period T1 and the retransmission time period T2 into the protocol of Fig. 4, first, upon generation of a request for data processing to be executed, the data processing request unit 1-1 generates load inquiry signals S2 and S3 and transmits the load inquiry signals S2 and S3 to all of the data processing execution units 2-1 and 2-2.

In this state, the data processing execution units 2-1 and 2-2 enter into a reception prohibiting state for the reception prohibiting time period T1. Therefore, even when the data processing request unit 1-2 generates load inquiry request signals S2' and S3' , the signals S2' and S3' are rejected by the data processing execution units 2-1 and 2-2.

Next, each of the data processing execution units 2-1 and 2-2 inform their current load states to the data processing request unit 1-1 by generating load response signals S4 and S5.

Then, the data processing request unit 1-1 selects one of the data processing execution units 2-1 and 2-2 which is in the lowest load state. In this case, the data processing request unit 1-1 selects the data processing execution unit 2-2. Then, the data processing request unit 1-1 transmits a data processing execution requesting signal S7 directly to the data processing execution unit 2-2. Thus, the data processing execution unit 2-2 executes data processing for the data processing request unit 1-1.

In this state, the load of the data processing execution unit 2-2 is increased, while the load of the data processing execution unit 2-1 is decreased.

After the retransmission time period T2 has passed, the data processing execution unit 1-2 generates load inquiry request signals S2'' and S3'' and transmits them to the data processing execution units 2-1 and 2-2, again. At this time, since the reception prohibiting time period T1 is also released, the data processing execution units 2-1 and 2-2 receive the load inquiry request signals S2'' and S3'', respectively.

Next, both of the data processing execution units 2-1 and 2-2 inform their current load states to the data processing request unit 1-2 by generating load response signals S4' and S5'.

Then, the data processing request unit 1-2 selects one of the data processing execution units 2-1 and 2-2 which is in the lowest load state. In this case, the data processing request unit 1-2 selects the data processing execution unit 2-1. Then, the data processing request unit 1-2 transmits a data processing execution requesting signal S7' directly to the data processing execution unit 2-1. Thus, the data processing execution unit 2-1 executes data processing for the data processing request unit 1-2.

Thus, according to the protocol as shown in Fig. 6, unbalanced assignment of data to be processed to the data processing execution units 2-1 and 2-2 can be avoided, to make the load states thereof uniform.

As explained hereinbefore, according to the present invention, since data processing request units poll data processing execution units individually and directly about the load states thereof, without centralized control, a protocol therefor can be simplified.

## Claims

1. A distributed data processing system comprising:
a plurality of data processing request units (1-1∼1-3);
a plurality of data processing execution units (2-1 ∼2-3); and
a network (3) interposed and connected between said data processing request units and said data processing execution units,
each of said data processing request units comprising:
a first means for transmitting a plurality of load inquiry request signals (S2, S3) via said network to said data processing execution units;
a second means for receiving load response signals (S4, S5) via said network from said data processing execution units, each of the load response signals indicating a load state of one of said data processing execution units;
a third means for selecting one of said data processing execution units having the lowest load state in accordance with the load response signals; and
a fourth means for transmitting a data processing execution requesting signal (S7) via said network to one of said data processing execution units selected by said third means,
each of said data processing execution units comprising:
a fifth means for receiving a load inquiry request signal via said network from one of said data processing request units;
a sixth means for transmitting a load response signal showing a load state to the one of said data processing request units in response to the load inquiry request signal received by said fifth means;
a seventh means for receiving a data processing execution requesting signal via said network from one of said data processing request units; and
an eighth means for executing data processing in accordance with the data processing execution requesting signal received by said data processing execution requesting signal.

2. A system as set forth in claim 1, wherein each of said data processing execution units further comprises a ninth means for prohibiting an operation of said fifth means for a first definite time period (T1) each time after said fifth means receives a load inquiry request signal.

3. A system as set forth in claim 2, wherein the first definite time period is larger than a time period defined from a time when one load inquiry request signal is received by one of said data processing execution units to a time when a data processing execution requesting signal corresponding to the load inquiry request signal is received by the same one of said data processing execution units.

4. A system as set forth in claim 2, wherein each of said data processing request units further comprises a tenth means for making said first means operate again unless said second means receives at least one of said load response signals within a second definite time period (T2).

5. A system as set forth in claim 4, wherein the second definite time period is larger than the first definite time period.

6. A distributed data processing system comprising:
a plurality of data processing request units (1-1∼1-3);
a plurality of data processing execution units (2-1 ∼2-3); and
a network (3) interposed and connected between said data processing request units and said data processing execution units,
each of said data processing request units comprising:
a first means for transmitting a plurality of load inquiry request signals (S2, S3) via said network to said data processing execution units;
a second means for receiving load response signals (S4, S5) via said network from said data processing execution units, each of the load response signals showing a load state of one of said data processing execution units;
a third means for making said first means operate again unless said second means receives at least one of said load response signals within a retransmission time period (T2);
a fourth means for selecting one of said data processing execution units having a lowest load state in accordance with the load response signals; and
a fifth means for transmitting a data processing execution requesting signal (S7) via said network to one of said data processing execution units selected by said fourth means,
each of said data processing execution units comprising:
a sixth means for receiving a load inquiry request signal via said network from one of said data processing request units;
a seventh means for prohibiting an operation of said sixth means for a reception prohibiting time period (T1) every after said sixth means receives the load inquiry request signal;
an eighth means for transmitting a load response signal showing a load state to the one of said data processing request units in response to the load inquiry request signal received by said sixth means;
a ninth means for receiving a data processing execution requesting signal via said network from one of said data processing request units; and
a tenth means for executing data process in accordance with the data processing execution requesting signal received by said ninth means.

7. A system as set forth in claim 6, wherein the reception prohibiting time period is larger than a time period defined from a time when one load inquiry request signal is received by one of said data processing execution units to a time when a data processing execution requesting signal corresponding to the load inquiry request signal is received by the one of said data processing execution units.

8. A system as set forth in claim 6, wherein the retransmission time period is larger than the reception prohibiting time period.
